# EUROPEAN PATENT SPECIFICATION

(11) **EP 3 060 567 B1**
(45) Date of publication and mention of the grant of the patent: **05.12.2018**
(21) Application number: 14796444.9
(22) Date of filing: 24.10.2014
(51) Int. Cl.: C07F 9/38

(54) **METHOD FOR THE SYNTHESIS OF ALKANE-1-HYDROXY-1,1-DIPHOSPHONIC ACID**
VERFAHREN ZUR SYNTHESE VON ALKAN-1-HYDROXY-1,1-DIPHOSPHONSÄURE
PROCÉDÉ POUR LA SYNTHÈSE DE L'ACIDE ALKANE-1-HYDROXY-1,1-DIPHOSPHONIQUE

(30) Priority: 25.10.2013 EP 13190246
(43) Date of publication of application: 31.08.2016
(73) Proprietor: Straitmark Holding AG, 6300 Zug (CH)
(72) Inventor: COGELS, Samuel, 1050 Brussels (BE); NOTTÉ, Patrick Pierre, 1300 Wavre (BE)
(74) Representative: Pronovem
(86) International application number: PCT/EP2014/072876
(87) International publication number: WO 2015/059287

(56) References cited:
- DE-A1- 2 345 199

## Description

### Field of the Invention

The present invention is related to a method for the synthesis of alkane-1-hydroxy-1,1-diphosphonic acid or its salts.

### State of the Art

Diphosphonic acids are effective chelating agents that bind tightly to di- and trivalent metal ions, preventing them from forming insoluble precipitates (scale) and suppressing their catalytic properties. They also are very effective scale inhibitors through crystal growth perturbation and dispersion of the formed crystals. An important industrial use of diphosphonic acids is in cooling waters, desalination systems and in oil fields to inhibit scale formation. In pulp and paper manufacturing and in textile industry they serve as "peroxide bleach stabilizers" by chelating metals that could inactivate the peroxide. In detergents they are used as a combination of chelating agent, scale inhibitor and bleach stabilizer.
Alkyl hydroxy diphosphonic acids and their salts are also used to make clay nanocomposites and to produce films and coatings with improved chemical resistance and gas barrier properties. They are also known to contribute to enhance corrosion resistance of metals like steel, aluminium or tin coated steel and aluminium. Further they are known as corrosion inhibitors for anti-freeze coolants and other functional fluids. They are also used for metal extraction and metal deactivator in oil. They can also contribute to improve anti-wear and extreme-pressure properties of lubricants and are used as surfactants in detergent formulations.

A number of methods for the production of alkane-1-hydroxy-1,1-diphosphonic acids are already known. In general these methods consist in reacting acylating agents, particularly carboxylic acid chlorides or carboxylic acid anhydrides or mixtures thereof with phosphorous acid, as disclosed for example in DE 1072346. It is also possible to react phosphorus trihalides with carboxylic acids to produce alkane-1-hydroxy-1,1-diphosphonic acids as for example disclosed in GB 981,252, US 4,332,736, EP 0104974 and US 6,143,923.

The resulting products are not homogeneous however. For the production of pure substances it is therefore necessary to carry out cumbersome purifying operations. Besides, the processes starting from either acyl chloride or phosphorus trichloride both suffer from the presence of acyl chloride and/or hydrogen chloride present in the reaction medium as an initial reactant or produced during the manufacturing process. Because of the high reaction temperature, hydrogen chloride gas and unreacted acyl chloride can leave the reactor. Extreme caution must be exercised in handling the acyl chlorides because of their toxicity, volatility, combustibility and reactivity with water and alkalis. Because acyl chlorides are such reactive compounds, precautions should be taken while handling them. They are lachrymatory because they can react with water at the surface of the eye producing hydrochloric and organic acids irritating to the eye. Similar problems can result from the inhalation of acyl chloride vapors.

DE 2345199 discloses a process for the preparation of ethyl-1-hydroxy-1,1-diphosphonic acid.

DE 2343876, DD214609, DD222600 and GB 1,138,238 disclose a process for the manufacturing of alkane-1-hydroxy-1,1 -diphosphonic acids wherein the corresponding carboxylic acid is put into reaction with tetraphosphorus hexaoxide.

DE 2343876 discloses a method for the simultaneous manufacture of alkane(C₂-C₆)-1-hydroxy-1,1-diphosphonic acid and acid anhydrides obtained from the reaction of tetraphosphorus hexaoxide and an alkane carboxylic acid wherein the molar ratio of tetraphosphorus hexaoxide to alkane carboxylic acid is less than 1/ 8 and preferably less than 1/15 at a temperature between room temperature and the boiling temperature of the alkane carboxylic acid. The mixing of tetraphosphorus hexaoxide and the alkane carboxylic acid is done within a period between 2 and 5 minutes. Both, the reaction of carboxylic acid and phosphor(III)-oxide to form acylphosphites as well as the conversion of acylphosphites into alkanehydroxydiphosphonic acid condensates are performed at a temperature comprised between about 20°C and the boiling temperature of the carboxylic acid. The global reaction is separated into two separate exothermic steps (separated in time) through which the absorption of the reaction heat can be controlled. The initial excess of alkane carboxylic acid and alkane carboxylic anhydride, formed during the reaction, are distilled off under vacuum, preferably at a pressure of 50 mm Hg, and the alkane-1-hydroxy-1,1-diphosphonic acid condensates are hydrolyzed subsequently.

DD 214609 discloses a method for the manufacture of acyloxyalkane diphosphonic acid (reaction of alkane-1-hydroxy-1,1-diphosphonic acid and carboxylic acid) from the reaction of a C₂ to C₄ carboxylic acid with P₄O_{(6 to 9)} wherein the molar ratio of P₄O_{(6 to 9)} / carboxylic acid is 1/ >10. Acylphosphites are formed at a temperature of less than 50°C. Subsequently the reaction mixture is heated to and maintained at a temperature comprised between about 90°C and the boiling temperature of the carboxylic acid for a time period between 10 minutes and 3 hours whereupon the acylphosphites are converted into acyloxyalkane diphosphonic acid. All the examples, (example 1 to 6) are based on the reaction of P₄O₆ and acetic acid. Only example 7 is based on the reaction of P₄O₆ and propionic acid. For all the examples acyloxyalkane diphosphonic acid is obtained after distillation, under vacuum, of the excess of carboxylic acid.

DD 222600 discloses a method for the manufacture of long linear or branched (C₆-C₁₇) alkane-1-hydroxy-1,1-diphosphonic acid from the reaction of phosphorous acid and P₄0₆ in a molar ratio of from 3:1 to 0:1, preferably 2:1. The molar ratio of phosphor to carboxylic acid is from 4:1 to 2:1 and preferably 3:1. For the P containing compound being P₄O₆, the molar ratio of alkane carboxylic acid to P₄O₆ is from 1:1 to 0.5:1 and preferably 0.75 :1
It is mentioned that an excess of phosphor containing compound is used in order to avoid free carboxylic acid in the final reaction mixture, said unreacted carboxylic acids being difficult to get rid of. After reaction of the phosphor containg compound and the carboxylic acid, the reaction mixture is hydrolyzed. Subsequently an aliphatic C₅-C₆ alkanol is added to the hydrolysate; after extraction of phosphorous acid and phosphoric acid with water, alkane-1-hydroxy-1,1-diphosphonic acid is isolated from the aliphatic C₅-C₆ alkanol phase. The use of hydrogen peroxide, as in example 1, suggests the formation of LOOPs (Low Oxide of Phosphorus), which are highly unstable at higher temperature.

GB 1,138,238 discloses a process for preparing a hydroxydiphosphonic acid from elemental phosphorus which comprises: (a) preparing a dispersion of elemental phosphorus in an organic medium containing or consisting of a carboxylic acid, (b) introducing an oxidizing gas into said dispersion with vigorous mixing whereby the elemental phosphorus is oxidized in situ to an acid anhydride of trivalent phosphorus which then reacts with the carboxylic acid to form phosphite intermediate compounds in the reaction mixture, (c) maintaining the reaction mixture at a temperature of from 70°C to 170°C and (d) hydrolyzing the resultant mixture. Acetic acid is the preferred carboxylic acid; after the hydrolysis step, the solution of ethane-1-hydroxy-1,1-diphosphonic acid, in general, is cooled down to a temperature below 30°C resulting in the crystallization of ethane-1-hydroxy-1,1-diphosphonic acid. Acetic acid is recovered from the filtrate through distillation and is reusable in a subsequent process. Many of the carboxylic acids are solids at room temperature and consequently require the use of a non-aqueous solvent to prepare the dispersion of phosphorus, to dissolve the carboxylic acid and also to dissolve, at least partially, the phosphonate intermediate compounds.

The modus operandi as well as the reaction conditions, presented in these patents, are such that the heat produced by the conversion of acyl phosphite and diacyl phosphite, accumulated in the reaction mixture, into alkane-1-hydroxy-1,1 - diphosphonic acid condensates is difficult or even impossible to control as a result of which the decomposition temperature can be achieved and secondary products, which may be explosive, can be generated.

Moreover the methods of the art do not produce alkane-1-hydroxy-1,1-diphosphonic acid compounds which substantially do not comprise free carboxylic acid, nor does the art teach how to recover and to reuse the excess of carboxylic acids in a subsequent reaction step, especially for the case that the carboxylic acid is different from acetic acid.

As appears from the above, all processes reported in the art suffer from some disadvantages related either to economical aspects or to safety issues and without contesting the associated advantages of the state in the art processes, it nevertheless is obvious that there is still a need for a process which does not show any of the existing known drawbacks and /or shortcomings

### Aims of the Invention

The present invention aims to provide a method for the synthesis of alkane-1-hydroxy-1,1-diphosphonic acids that does not present the drawbacks of the methods of the state of the art.
Advantageously the method of this invention is environmentally-friendly, economically attractive and safe, in particular it avoids the formation of highly unstable LOOPs.

### Summary of the Invention

The present invention discloses a method for the synthesis of alkane-1-hydroxy-1,1-diphosphonic acid or its salts, under controlled thermal conditions, by substantially avoiding the formation of phosphines and low oxides of phosphorus and the accumulation of phosphite intermediates, comprising the steps of:
a) forming a reaction mixture by gradually adding tetraphosphorus hexaoxide, under optimal mixing conditions, to the liquid phase comprising a carboxylic acid, while controlling the temperature of the reaction mixture in the range of from 80°C to 200°C wherein said reaction mixture comprises a molar ratio of carboxylic acid to tetraphosphorus hexaoxide comprised between 3 and 15, selected in such a way that the viscosity of the reaction mixture enables said optimal mixing conditions, the gradual addition leading to the formation of alkane-1-hydroxy-1,1-diphosphonic acid condensates;
b) hydrolyzing the alkane-1-hydroxy-1,1-diphosphonic acid condensates of the reaction mixture of step a) by adding water, wherein the molar ratio of water to tetraphosphorus hexaoxide, added in step a) is 1 or more, and maintaining the reaction mixture at a temperature of at least 100°C to obtain a solution comprising the alkane-1-hydroxy-1,1-diphosphonic acid.

Preferred embodiments of the present invention disclose one or more of the following features:
- the temperature range of the reaction mixture of step a) is achieved through an initial tetraphosphorus hexaoxide addition step or a preheating of the liquid phase comprising carboxylic acid before starting the gradual addition of tetraphosphorus hexaoxide;
- the method of the present invention further comprises the steps of:
   - adding a suitable solvent to obtain a precipitate of alkane-1-hydroxy-1,1-diphosphonic acid,
   - isolating the precipitate through filtration to obtain solid alkane-1-hydroxy-1,1 -diphosphonic acid;
- the solution of step b) is cooled down before the addition of a suitable solvent;
- tetraphosphorus hexaoxide is gradually added below the surface of the liquid phase comprising carboxylic acid;
- tetraphosphorus hexaoxide is gradually added below the surface of the liquid phase, comprising carboxylic acid, said carboxylic acid being characterized by an atmospheric boiling point of 40°C or less above the temperature of step a);
- the viscosity of the reaction mixture of step a) is 10 Pa.s or less, preferably 8 Pa.s or less, more preferably 6 Pa.s or less and most preferably 5 Pa.s or less, as measured by an "in process" vibrational viscometer calibrated with Certified Standard Oils, at the temperature of the reaction mixture, comprised between about 80°C and about 200°C, throughout the complete duration of step a);
- the method of the present invention further comprises the step of neutralizing the alkane-1-hydroxy-1,1-diphosphonic acid through the addition of a base selected from the group consisting of hydroxides of alkali metals, hydroxides of alkaline earth metals, ammonia and amines, to form the corresponding salt;
- the molar ratio of carboxylic acid of step a) to the total amount of tetraphosphorus hexaoxide added in step a) is between about 4 and about 10 and preferably between about 4 and about 8;
- the carboxylic acid of step a) comprises water;
- the molar ratio of water of the aqueous solution of the carboxylic acid of step a) to the total amount of tetraphosphorus hexaoxide, added in step a) is between about 0.1 and about 2.0 and preferably between about 0.5 and about 1.5;
- the tetraphosphorus hexaoxide is gradually added to the carboxylic acid in a period of time comprised between about 5 minutes and about 5 hours;
- the reaction mixture of step a) is heated to a temperature comprised between about 80°C and about 200°C, preferably between about 90°C and about 160°C, and is maintained at that temperature throughout the tetraphosphorus hexaoxide addition step;
- step a) is maintained at a temperature between about 100°C and about 160°C and preferably between about 100°C and about 130°C for a period of time between about 5 minutes and about 2 hours, after completion of the tetraphosphorus hexaoxide addition;
- the molar ratio of water added in step b) to the total amount of tetraphosphorus hexaoxide added in step a) is between about 0.5 and about 6 and preferably between about 1 and about 4 and more preferably about 3;
- step b) is maintained at a temperature between about 100°C and about 170°C and preferably between about 120°C and about 160°C for a period of time between about 5 minutes and about 4 hours;
- the precipitate, obtained through the addition of an organic solvent to the aqueous solution of step b), is isolated from the filtrate;
- the solvent present in the filtrate is distilled off to form the mother liquor, comprising the carboxylic acid, for being reused in a subsequent step a);
- excess of water present in the mother liquor is distilled off, the resulting mother liquor being reused in a subsequent step a) and the water, comprising carboxylic acid, being reused in a subsequent step b);
- the carboxylic acid is a linear or branched saturated or unsaturated aliphatic or saturated or unsaturated cycloaliphatic C₃ - C₂₅ mono- or polycarboxylic acid, optionally substituted with one or more substituents selected from the group consisting of aryl, aralkyl, alkoxy, halogen, and optionally comprising one or more heteroatoms selected from the group consisting of oxygen, sulfur or nitrogen;
- the carboxylic acid is a linear or branched saturated aliphatic C₃ - C₅₀ monocarboxylic acid, preferably a linear or branched saturated aliphatic or saturated cycloaliphatic C₅ - C₂₅ monocarboxylic acid;

### Brief Description of the Drawings

Fig. 1 represents a comparison of the exotherm during the progress of the reaction, observed when applying a method of the state of the art and the method according to the present invention, wherein:
   - the continuous line represents the exotherm as a function of time for the method according to the present invention;
   - the dotted line represents the exotherm as a function of time for a method of the state of the art.
Fig. 2 shows some examples of possible reactions involved in the synthesis of alkane-1-hydroxy-1,1-diphosphonic acid from a carboxylic acid, in the liquid phase, and tetraphosphorus hexaoxide. In this figure,
   - equation 1 represents the optional conversion of the tetraphosphorus hexaoxide into phosphorous acid through the reaction of tetraphosphorus hexaoxide and water that can be optionally added to the carboxylic acid;
   - equation 2 represents the formation of acyl phosphite and diacyl phosphite through the reaction of tetraphosphorus hexaoxide and the carboxylic acid;
   - equation 3 represents the formation of acyl phosphonate through the reaction of (di)acyl phosphite with phosphorous acid;
   - equation 4 represents the formation of alkane-1-hydroxy-1,1-diphosphonic acid condensates through reaction of acyl phosphonate with diacyl phosphite;
   - equation 5 represents the formation of alkane-1-hydroxy-1,1-diphosphonic acid (HADP) through hydrolysis of the alkane-1-hydroxy-1,1-diphosphonic acid condensates, of alkane-1-acetyl-1,1-diphosphonic acid and of the dimer of alkane-1-hydroxy-1,1-diphosphonic acid.

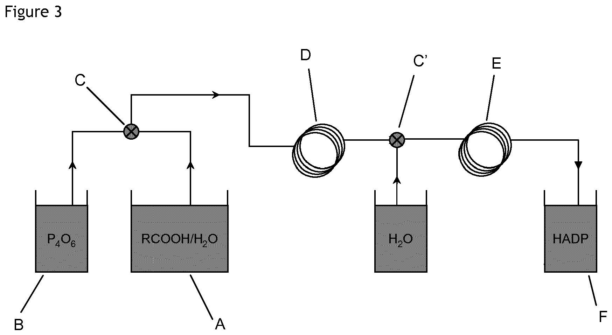

Fig. 3 represents the system employed for the continuous synthesis of alkane-1-hydroxy-1,1-diphosphonic acid wherein (A) represents the vessel containing the carboxylic acid in the liquid phase, (B) represents the vessel containing tetraphosphorus hexaoxide, (C) represents the mixing unit for mixing the liquid carboxylic acid and tetraphosphorus hexaoxide, (D) represents the reactor where alkane-1-hydroxy-1,1-diphosphonic acid condensates are formed, (C') represents the mixing unit for mixing the alkane-1-hydroxy-1,1-diphosphonic acid condensates and water, (E) represents the reactor where the alkane-1-hydroxy-1,1-diphosphonic acid condensates are hydrolysed and alkane-1-hydroxy-1,1-diphosphonic acid is formed and (F) represents the unit where alkane-1-hydroxy-1,1-diphosphonic acid is further processed i.e. optionally distilling off water comprising carboxylic acid, cooling down the reaction mixture comprising alkane-1-hydroxy-1,1-diphosphonic acid, adding a suitable solvent to obtain a precipitate of alkane-1-hydroxy-1,1-diphosphonic acid , isolating the precipitate through filtration and further treatment of the filtrate in order to become the correct mother liquor. On lab-scale the system is composed of three HPLC pumps (respectively connected to vessel (A), (B) and a vessel containing water), 1 mm bore PFA tubings, T type mixers (C) and (C'), two heated coil reactors (D) and (E) composed of 1 mm bore tubing made of stainless steel and with a internal volume of 10 ml.

### Detailed Description of the Invention

The present invention provides a safe, economical and environmentally friendly method for the synthesis of alkane-1-hydroxy-1,1-diphosphonic acid.
The method includes the steps of:
- reacting tetraphosphorus hexaoxide and a carboxylic acid in the liquid phase, wherein the tetraphosphorus hexaoxide is gradually added, preferably below the surface of the liquid phase comprising said carboxylic acid, while controlling the temperature at a value of about 80°C or more, preferably at a value comprised between about 100°C and about 200°C;
- hydrolyzing the formed hydroxy-diphosphonic acid condensates to form a solution comprising alkane-1-hydroxy-1,1-diphosphonic acid.
- optionally cooling down the solution and adding a suitable solvent to precipitate the alkane-1-hydroxy-1,1-diphosphonic acid and filter the precipitate thus obtained.
In the present invention it is understood that the expression alkane-1-hydroxy-1,1-diphosphonic acid comprises all species comprising 2, 4 or more phosphonic acid groups dependent on the type of carboxylic acid used for reacting with tetraphosphorus hexaoxide, i.e. a mono-, di- or a polycarboxylic acid respectively.

The tetraphosphorus hexaoxide used in a preferred embodiment of the present invention may be represented by a substantially pure compound containing at least 85 %, preferably more than 90 %, more preferably at least 95 % and in one particular execution at least 97 % of P₄O₆. While tetraphosphorus hexaoxide, suitable for use within the context of this invention, may be manufactured by any known technology, in preferred executions it is prepared in accordance with the method described in WO 2009/068636 and/or WO 2010/055056 under the section entitled "Process for the manufacture of P₄O₆ with improved yield". In detail, oxygen, or a mixture of oxygen and inert gas, and gaseous or liquid phosphorus are reacted in essentially stoichiometric amounts in a reaction unit at a temperature in the range from about 1600 to about 2000 K, by removing the heat created by the exothermic reaction of phosphorus and oxygen, while maintaining a preferred residence time of from about 0.5 to about 60 seconds followed by quenching the reaction product at a temperature below 700 K and refining the crude reaction product by distillation. The tetraphosphorus hexaoxide so prepared is a pure product containing usually at least 97 % of the oxide. The so produced P₄O₆ is generally represented by a liquid material of high purity containing in particular low levels of elementary phosphorus, P₄, preferably below 1000 ppm, expressed in relation to the P₄O₆ being 100%. The preferred residence time is from about 5 to about 30 seconds, more preferably from about 8 to about 30 seconds. The reaction product can, in one preferred execution, be quenched to a temperature below 350 K. It is presumed that the P₄O₆ participating in a reaction at a temperature of from about 24°C (melting t°) to about 200°C is necessarily liquid or gaseous although solid species can, academically speaking, be used in the preparation of the reaction medium.

For reasons of convenience and operational expertise, the tetraphosphorus hexaoxide, represented by P₄O₆, is of high purity, containing very low levels of impurities, in particular elemental phosphorus, P₄, at a level below 1000 ppm, usually below 500 ppm and preferably not more than 200 ppm, expressed in relation to the P₄O₆ being 100%.

The carboxylic acid is a saturated aliphatic C₃ to C₅₀ mono-carboxylic acid, preferably a linear or branched saturated aliphatic or saturated cycloaliphatic C₃ to C₂₅ mono-carboxylic acid, preferably selected from the group consisting of propionic acid, n-butyric acid, n-valeric acid, isovaleric acid, α-methylbutyric acid, pivalic acid, caproic acid, enanthic acid, caprylic acid, pelargonic acid, capric acid, undecylic acid, lauric acid, tridecanoic acid, myristic acid, pentadecanoic acid, palmitic acid, margaric acid, stearic acid, nonadecanoic acid, arachidic acid, heneicosanoic acid, behenic acid, tricosanoic acid, lignoceric acid, hyenic acid. The saturated aliphatic mono-carboxylic acid further may comprise one or more substituents which are substantially inert towards tetraphosphorus hexaoxide. Typical substituents are for example aryl or aralkyl, alkoxy, halogen; the saturated aliphatic mono-carboxylic acid further may comprise one or more heteroatoms such as oxygen, sulfur, nitrogen.

Preferably the C₃ - C₂₅ carboxylic acid is a linear or branched chain saturated mono-carboxylic acid. More preferably the linear or branched chain saturated mono-carboxylic acid is a C₅ - C₂₅ carboxylic acid .

Within the scope of the present invention C₃ to C₅₀ unsaturated aliphatic monocarboxylic acids, preferably linear or branched unsaturated aliphatic or unsaturated cycloaliphatic C₃ to C₂₅ mono-carboxylic acids or saturated and unsaturated aliphatic polycarboxylic acids, preferably linear or branched saturated and unsaturated aliphatic or saturated and unsaturated cycloaliphatic C₃ - C₂₅ polycarboxylic acids can be used as well.

When the carboxylic acid is an unsaturated aliphatic mono-carboxylic acid it is preferably selected from the group consisting of acrylic acid, crotonic acid, isocrotonic acid, vinylacetic acid, myristoleic acid, palmitoleic acid, sapienic acid, oleic acid, elaidic acid, vaccenic acid, linoleic acid, linoelaidic acid, α-linolenic acid, arachidonic acid, eicosapentaenoic acid, erucic acid, docosahexaenoic acid and monoalkylesters of unsaturated aliphatic dicarboxylic acid, having from 3 to 25 carbon atoms. The unsaturated aliphatic mono-carboxylic acid further may comprise one or more substituents which are chemical inert towards tetraphosphorus hexaoxide. Typical substituents are for example aryl or aralkyl, alkoxy, halogen; the unsaturated aliphatic mono-carboxylic acid further may comprise one or more heteroatoms such as oxygen, sulfur, nitrogen.

When the carboxylic acid is a saturated aliphatic polycarboxylic acid it is preferably selected from the group consisting of glutaric acid, adipic acid, pimelic acid, suberic acid, azelaic acid, sebacic acid, 1,10-decanedioic acid, 1,11-undecanedioic acid, 1,12-dodecanedioic acid, 1,13-tridecanedioic acid, 1,14-tetradecanedioic acid, 1,15-pentadecanedioic acid and/or their corresponding anhydrides. The saturated aliphatic polycarboxylic acid further may comprise one or more substituents which are chemically inert towards tetraphosphorus hexaoxide. Typical substituents are for example aryl or aralkyl, alkoxy, halogen; the saturated aliphatic polycarboxylic acid further may comprise one or more heteroatoms such as oxygen, sulfur, nitrogen.

When the carboxylic acid is an unsaturated aliphatic polycarboxylic acid it preferably is selected from the group consisting of crotonic acid, itaconic acid, fumaric acid, citraconic acid, glutaconic acid, traumatic acid, muconic acid, 2-hexenedioic acid, 3-hexenedioic acid, 2-octenedioic acid, 3-octenedioic acid, 4-octenedioic acid, 2-decenedioic acid, 3-decenedioic acid, 4-decenedioic acid, 5-decenedioic acid and/or their corresponding anhydrides. The unsaturated aliphatic polycarboxylic acid further may comprise one or more substituents which are chemical inert towards tetraphosphorus hexaoxide. Typical substituents are for example aryl or aralkyl, alkoxy, halogen; the unsaturated aliphatic mono-carboxylic acid further may comprise one or more heteroatoms such as oxygen, sulfur, nitrogen.

Within the scope of the present invention mixtures of carboxylic acids can be used.

The process of the present invention is started by charging a carboxylic acid into a reactor. The carboxylic acid then is heated in order to get a liquid phase and water is advantageously added. Tetraphosphorus hexaoxide is gradually added, optionally in the liquid phase of carboxylic acid.

In the present invention it is understood that the gradual addition in the liquid phase comprises the gradual addition below the surface of the carboxylic acid in a batch mode process or the continuous addition in a stream of liquid carboxylic acid, in a continuous process.

For the case that the carboxylic acid comprises water, the gradual addition of tetraphosphorus hexaoxide results in an immediate and continuous increase of the temperature of the reaction mixture until a fixed preset temperature comprised between about 80°C and about 200°C, preferably between about 90°C and about 160°C, more preferably between about 100°C and about 140°C and most preferably between about 100°C and about 130°C is obtained.

For the case that no water is present, the carboxylic acid is preferably heated to a temperature comprised between about 80°C and about 200°C, preferably between about 90°C and about 160°C, more preferably between about 100°C and about 140°C and most preferably between about 100°C and about 130°C before the start of the tetraphosphorus hexaoxide addition.

Intermediary cases are possible dependent on the amount of water present in the carboxylic acid.

Once the temperature has reached its preset value, it is maintained at that preset value, throughout the remaining tetraphosphorus hexaoxide addition step, by monitoring and adjusting the addition rate of the tetraphosphorus hexaoxide. The addition rate of the tetraphosphorus hexaoxide is dependent on the capabilities of the reactor's heat exchanging means for managing and controlling the heat generated by the reaction.

Though some of the reactants of step a) may be thermally unstable at temperatures above 160°C, when they are considered as such, it is believed that these reactants under specific reaction conditions are instantly converted into products which are more stable at these elevated temperatures.

The upper temperature limit actually aims at preventing any substantially undue thermal decomposition of the tetraphosphorus hexaoxide and of the products formed during the reaction. It is understood and well known that the decomposition temperatures can vary depending upon additional physical parameters, such as pressure and the co-reactants in the reaction mixture.

Preferably the quantity of carboxylic acid is such that the molar ratio of the carboxylic acid to the total amount of tetraphosphorus hexaoxide to be added is between 3 and 15, preferably between 4 and 10 and more preferably between 4 and 8.

Preferably the quantity of water, optionally added to the carboxylic acid before the tetraphosphorus hexaoxide addition, is such that the molar ratio of water to the total amount of tetraphosphorus hexaoxide to be added is at most 3, preferably between 0.1 and 2.0 and more preferably between 0.5 and 1.5.

Preferably the gradual addition of the tetraphosphorus hexaoxide is performed over a period of between about 5 minutes and about 5 hours in such a way that the temperature of the reaction mixture remains within a predefined manageable range.

The gradual addition of the tetraphosphorus hexaoxide is performed under optimal mixing conditions which are for example obtained under intensive stirring. Optimal mixing conditions are obtained when the reaction characteristics are not sensitive to addition rate fluctuations of the reactants, i.e. when there is an almost immediate homogeneous distribution of the reactants throughout the reaction medium. The optimal mixing conditions are intended to have a substantial constant temperature during the entire tetraphosphorus hexaoxide addition step. Typical mixing equipment is well known by those skilled in the art and is for example a stirrer equipped with axial or radial flow impellers, a static mixer or an ultrasonic mixer used as a single or combined equipment.

Optimal mixing conditions are obtained for a reaction medium characterized by an adequate viscosity. By an adequate viscosity, it is meant, within the scope of the present invention, a dynamic viscosity of 10 Pa.s or less, preferably of 8 Pa.s or less, more preferably of 6 Pa.s or less and most preferably of 5 Pa.s or less , measured at the temperature of the reaction mixture of step a), throughout the complete temperature range of step a), and throughout the whole duration of step a) i.e. from the initiation of the P₄O₆ injection till completion of step a).

The dynamic viscosity values, as specified within the scope of the present invention are these as obtained from the ReactaVisc 300 "in process" vibrational viscometer from Hydramotion Ltd., calibrated with Cannon Certified Standard Oils which are traceable to the National Institute of Standards and Technology.

The use of a mixture of carboxylic acid and water in step a) may be intended for adjusting the viscosity of the reaction mixture throughout step a) within specific limits enabling optimal mixing. The molar ratio's of carboxylic acid to P₄O₆ and of water to P₄O₆ will determine the viscosity throughout step a); in order to obtain and maintain appropriate reaction conditions, the selection of specific experimental ratio's, within the respective ranges, as claimed in the present invention, is obvious for those skilled in the art.

It is very important that the reaction mixture is adequately stirred throughout the reaction zone. If stirring is inadequate, the desired reaction rate is adversely affected and, in addition, undesirable by-products may be formed.

The rate and the way of the gradual addition of the tetraphosphorus hexaoxide, the intensity of the stirring and the value of the temperature throughout the addition of the tetraphosphorus hexaoxide are critical parameters for controlling the exothermic reaction and preventing any substantial undue decomposition of the reactants or of the intermediates formed in these reactions and avoiding the formation of highly unstable LOOPs (Low Oxide of Phosphorus)

As disclosed in ***"***Phosphorus compounds", Kirk-Othmer encyclopaedia Vol. 18 page 737 - 799 and by J.G. Riess and J.R. Van Wazer in "The Descriptive Chemistry of Phosphorus Trioxide", Inorg. Chem. February 1966, Vol. 5, N° 2, pages 178-183***,*** LOOPs, which form a yellow to yellow-orange solid, are a complex mixture of lower oxides and polymers of phosphorous. LOOPs may either hydrolyse slowly, be pyrophoric or pyrolyze rapidly and yield toxic, flammable, self-igniting and explosive diphosphine-contaminated phosphines. LOOPs can also decompose explosively in the presence of moisture and air near about 150°C.

The presence of LOOPs in a reactor system thus represents a considerable safety hazard: an explosion can result from the presence of LOOPs. Therefore, today's industrial synthesis processes of alkane-1-hydroxy-1,1 -diphosphonic acid require to control for LOOPs and to make provision for the case that LOOPs are detected. The control for LOOPs is highly important for reaction temperatures above 120°C and above all, before the onset of the hydrolysis step b).

In a preferred embodiment the tetraphosphorus hexaoxide is added in the liquid phase, i.e. below the surface of the liquid phase comprising the carboxylic acid; more preferably is gradually injected below the surface of the liquid phase comprising carboxylic acid.

The inventors have surprisingly found that the gradual addition of tetraphosphorus hexaoxide in the liquid phase, i.e. below the surface of the liquid phase, comprising carboxylic acid, is preferred for avoiding the formation of LOOPs and phosphines, even for optimal mixing conditions at mixing temperatures comprised between about 80°C and about 200°C.

For carboxylic acids, characterized by an atmospheric boiling point being 100°C or more above the temperature of step a) the addition of the tetraphosphorus hexaoxide may be performed to the liquid phase, i.e. above the surface of the liquid phase; yet, even for these particular cases, the addition of tetraphosphorus hexaoxide below the surface of the liquid phase is preferred.

For carboxylic acids, characterized by an atmospheric boiling point being 80°C or less and particularly being 60°C or less above the temperature of step a) the addition of the tetraphosphorus hexaoxide in the liquid phase, i.e. below the surface of the liquid phase may be of crucial importance for avoiding the formation of LOOPs and phosphines.

Without wishing being bond by theory it is believed that the reaction of tetraphosphorus hexaoxide with carboxylic acid in the vapor phase above the liquid phase of carboxylic acid or the aqueous carboxylic acid solution, and the possible subsequent reactions of possible intermediates within this vapor phase are the cause of this LOOP and phosphine formation especially for those carboxylic acids for which the value of the atmospheric boiling point is 80°C or less above the temperature of step a), resulting in an increased vapor pressure of the carboxylic acid.

The inventors have found as well that the gradual injection of tetraphosphorus hexaoxide in the liquid phase, i.e. below the surface of the liquid phase, comprising carboxylic acid, is mandatory for avoiding the formation of LOOPs and phosphines, even for optimal mixing conditions at mixing temperatures comprised between about 80°C and about 200°C, when said carboxylic acid is characterized by an atmospheric boiling point being 40°C or less above the temperature of step a).

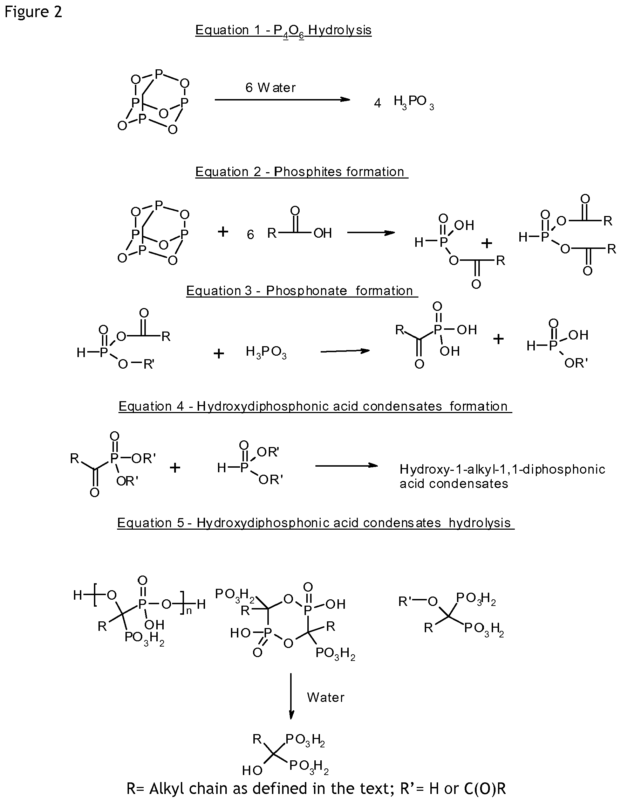

At the onset of the tetraphosphorus hexaoxide addition, the water, if present, converts part of the tetraphosphorus hexaoxide into phosphorous acid (Fig.2 Equation 1). The hydrolysis of tetraphosphorus hexaoxide is exothermic generating about 300 kJ/mole of tetraphosphorus hexaoxide. The exotherm resulting from the tetraphosphorus hexaoxide hydrolysis and from the reaction of tetraphosphorus hexaoxide with the carboxylic acid, leading to acyl and diacyl phosphites, along with the energy input from an external heating source, is used to bring the reaction mixture to a preset temperature comprised between about 80°C and about 200°C, preferably between about 90°C and about 160°C, more preferable between about 100°C and about 140°C and most preferable between about 100°C and about 130°C within the initial phase of the tetraphosphorus hexaoxide addition and, after the initial temperature increase obtained within said initial phase, to maintain the reaction mixture at that preset temperature throughout the further addition of the remaining tetraphosphorus hexaoxide.

The substantial constant temperature of at least 80°C and the thoroughly stirring are key parameters for a continuous conversion of:
- tetraphosphorus hexaoxide and carboxylic acid into acyl phosphite and diacyl phosphite (Fig.2 Equation 2),
- acyl phosphite and diacyl phosphite into acylphosphonate (Fig.2 Equation 3),
- acylphosphonate, acyl phosphite and/or diacyl phosphite through reaction with phosphorous acid into alkane-1-hydroxy-1,1-diphosphonic acid condensates (Fig.2 Equation 4).
The above intermediate reactions are presumed to be one of the multiple possibilities for obtaining alkane-1-hydroxy-1,1-diphosphonic acid.

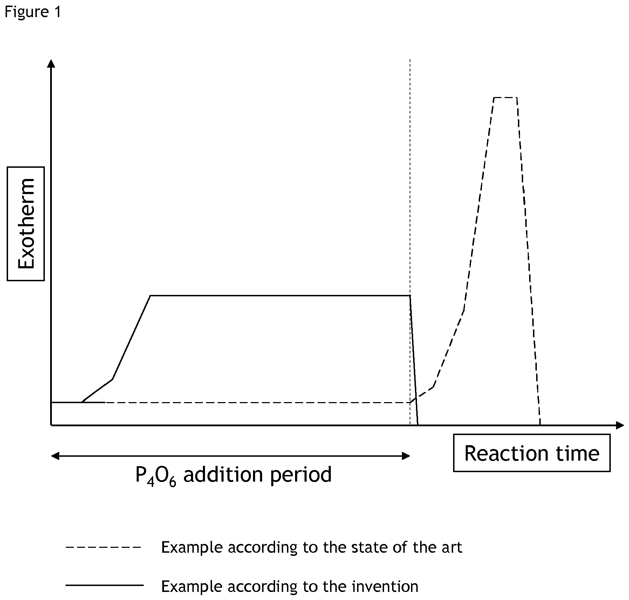

The gradual addition at high temperature of tetraphosphorus hexaoxide to the carboxylic acid, in the liquid phase, is extremely important for controlling the exothermic reaction. As can be seen on Fig. 1, the exotherm is moderate and controllable throughout the tetraphosphorus hexaoxide addition. The conversion of acyl phosphite and diacyl phosphite into alkane-1-hydroxy-1,1-diphosphonic acid condensates happens on a substantial continuous basis during the tetraphosphorus hexaoxide addition. When needed, the heat generation can be instantly completely stopped by the interruption of the tetraphosphorus hexaoxide addition. No exotherm is observed after the completion of the tetraphosphorus hexaoxide addition.

For step a) standing at a temperature below 80°C, the reaction substantially will stop at the stage of acyl phosphite and diacyl phosphite, which will accumulate in the reaction mixture of step a). As can be seen on Fig.1, increasing the temperature of the reaction mixture above 80°C, after the completion of the tetraphosphorus hexaoxide addition, will initiate the instantaneous conversion of acyl phosphite and diacyl phosphite into acylphosphonate and ultimately into alkane-1-hydroxy-1,1-diphosphonic acid condensates which are very exothermic reactions impossible to control. On industrial scale this would generate a major danger.

After the completion of the tetraphosphorus hexaoxide addition in step a), the reaction mixture is maintained at a temperature of at least 90°C, preferably at a temperature between about 100°C and about 160°C and more preferably between about 100°C and about 130°C for a period of time comprised between about 5 minutes and about 2 hours, preferably for a period of time of about 30 minutes, to complete the conversion into alkane-1-hydroxy-1,1-diphosphonic acid condensates.

In step b) water is added to the reaction mixture of step a) in order to hydrolyze the alkane-1-hydroxy-1,1-diphosphonic acid condensates as well as their acylated analogues.

The condensates are dimers and polymers wherein the alkane-1-hydroxy-1,1-diphosphonic acid units are linked at least partially through P-O-P anhydride bonds and P-O-C ester bonds.

The molar ratio of the water added in step b) to the tetraphosphorus hexaoxide added in step a) is at least 0.5, preferably comprised between about 0.5 and about 6, more preferably between about 1 and about 4 and most preferably about 3.

The temperature of step b) is comprised between about 100°C and about 170°C and preferably between about 130°C and about 150°C for a period of time comprised between about 5 minutes and about 4 hours.

The exotherm produced by the hydrolysis of the alkane-1-hydroxy-1,1-diphosphonic acid condensates in step b) as well as the supply of heat from an external source are used for maintaining step b) within the predefined temperature range for the whole step duration. In the course of step b) or after completion of step b) water comprising carboxylic acid may be distilled off.

The inventors have experienced that distillation does not allow to completely remove the free carboxylic acid from the alkane-1-hydroxy-1,1-diphosphonic acid end-product. Besides the inventors have perceived that distillation of the carboxylic acid does not allow to get a carboxylic acid quality suitable for being reused in a subsequent synthesis. In general too high quantities of water are present in the carboxylic acid obtained from distillation of the solution of step b).

It now has been surprisingly found that the addition of a suitable organic solvent to the aqueous solution of step b) results in the precipitation of alkane-1-hydroxy-1,1-diphosphonic acid, while distillation of the filtrate, obtained after filtration of the alkane-1-hydroxy-1,1-diphosphonic acid, allows for the separation of the organic solvent from the mother liquor whereby organic solvent and mother liquid can be reused in subsequent syntheses.

Solid alkane-1-hydroxy-1,1-diphosphonic acid is obtained through the addition of a suitable solvent, for the precipitation of alkane-1-hydroxy-1,1-diphosphonic acid, to the aqueous solution of step b).

Prior to the addition of the suitable solvent, the aqueous solution of step b) optionally may be cooled down to a temperature below about 170°C, preferably to a temperature comprised between about 15°C and about 150°C, more preferably to a temperature comprised between about 20°C and about 100°C.

Upon cooling down the aqueous solution of step b), in general the aqueous solution comprising a longer chain (cyclo)aliphatic-1-hydroxy-1,1-diphosphonic acid, a dense and sticky precipitate may be formed, once the temperature of the aqueous solution is below a certain critical value. This dense and sticky precipitate hardly can be further processed. Therefore the addition of the right solvent has to be performed timely, i.e. to an aqueous solution standing at a temperature above the critical value. On the other hand the selection and the use of a suitable solvent is additionally dictated by safety considerations.

The selection of the right solvent to be added to the aqueous solution of step b), standing at the right temperature for the precipitation of the alkane-1-hydroxy-1,1-diphosphonic acid, is common practice for those skilled in the art.

The suitable solvent is selected from but is not limited to diethylether, chloroform, 1,4-dioxane, tetrahydrofuran, ethylacetate, dichloromethane, dichloroethane, isopropyl acetate, diisopropylether, acetonitrile, toluene, acetone or mixtures of them. The solvent added to the aqueous solution of step b), to precipitate alkane-1-hydroxy-1,1-diphosphonic acid, preferably is a solvent which doesn't react with any of the products and reagents used within the scope of the invention. The choice of the solvent will depend on the particular alkane-1-hydroxy-1,1-diphosphonic acid that is produced. A solvent which is easily evaporated is preferred.

The precipitate of alkane-1-hydroxy-1,1-diphosphonic acid is filtered using conventional filtration techniques as known in the art, washed with the suitable solvent and dried.

The suitable solvent is removed from the filtrate through distillation. Distillation of the filtrate separates the solvent from the mother liquor, comprising carboxylic acid and possibly water.

Mother liquor and solvent are reused in step a) and in the precipitation step respectively, when accomplishing a subsequent process according to the present invention.

In the method of the present invention it is important that the molar ratio of water, added in step b), to tetraphosphorus hexaoxide, added in step a) is close to about 3. A too high amount of water, added in step b) may impair the precipitation of alkane-1-hydroxy-1,1-diphosphonic acid upon addition of the suitable solvent to step b) after being completed and optionally cooled down. Besides, a too high excess of water, added in step b), results in a mother liquor, obtained after precipitation and filtration of alkane-1-hydroxy-1,1-diphosphonic acid and distillation of the suitable solvent from the resulting filtrate, comprising water or comprising a too high amount of water, as a result of which the mother liquor cannot be reused, as such, in step a) of a subsequent process.

Water can be distilled off from a mother liquor comprising water or comprising a too high amount of water; because of the azeotrope of the carboxylic acid and water, obtained with specific carboxylic acid molecules, a certain amount of carboxylic acid will be present in the water, distilled off. The remaining mother liquor, obtained after distillation of water, then is reused in step a) of a subsequent process meanwhile the distillate, comprising water and a minor amount of carboxylic acid is reused in step b) of a subsequent process.

The method of the present invention thus presents considerable economical and environmental benefits not only because it is characterized by a high yield and selectivity, but also because of the substantially 100 % recovery and reuse of the unreacted reagents without any purification.

The free alkane-1-hydroxy-1,1-diphosphonic acid obtained by the method of the present invention further can be neutralized to any desired salt by reacting it with an appropriate base such as for example the hydroxides of alkali metals or the hydroxides of alkaline earth metals, ammonia or amines.

Suitable amines for use in the present invention include aliphatic, cycloaliphatic , heterocyclic and aromatic primary, secondary and tertiary (poly)amines. Among the large numbers of amines that can be used within the scope of the present invention, methylamine, propylamine, 2-propylamine, ethanolamine, propanolamine, n-butylamine, octylamine, ethylene diamine, trimethylene diamine, dimethylamine, methylethanolamine, dibutylamine, trimethylamine, methyl dibutyl amine, triethylamine, N,N-dimethyl cyclohexyl amine, N-methylpiperidine, aniline, 4-methylaniline and morpholine may be mentioned.

Preferably potassium or sodium hydroxide or ammonia is used to neutralize the diphosphonic acid. The neutralization step can be done at any time after the hydrolysis step.

Because of their multiple commercial applications, sodium, potassium and ammonium salts of alkane-1-hydroxy-1,1-diphosphonic acid are highly desirable.

The chemical reactions of the method according to the invention may be conducted in a batch-wise process.

It may be advantageous to conduct the reaction under pressure; this will speed up the process by increasing the reaction temperature above the carboxylic acid boiling point.

In another approach, the chemical reactions of the method of the invention may be conducted as a continuous process, possibly under autogeneous pressure, whereby the reactants are continuously injected into a reaction mixture at a suitable temperature. In the continuous process, as represented in Fig. 3, the liquid carboxylic acid is pumped continuously from a vessel A into a mixing unit C in which it is continuously and intimately mixed with tetraphosphorus hexaoxide, pumped from another vessel B. The reaction mixture leaving the mixing unit C is conveyed continuously to a reactor D or a series of reactors (D, D', D", ...) each characterized by a specific temperature and retention time, whereupon the alkane-1-hydroxy-1,1-diphosphonic acid condensates are continuously discharged into a mixing unit C' wherein the condensates are continuously mixed with water and wherein the mixture of condensates and water are continuously conveyed to a reactor E or a series of reactors (E, E', E", ...), each standing at a well defined temperature and characterized by a well defined retention time.
Each of the reactors D, (D', D", ...) and E (E', E", ...) are designed in such a way that they can be operated at pressures between about 0.001 bar (133.3 Pa) and about 15 bar (1.5* 10⁶ Pa). The aqueous solution of alkane-1-hydroxy-1,1-diphosphonic acid leaving the final hydrolyzing reactor E (E', E",...) is then further processed accordingly in working unit F, i.e. optionally distilling off water comprising carboxylic acid, optionally cooling down the reactor content discharged from reactor E (E', E",...), adding a suitable solvent to bring about the precipitation of alkane-1-hydroxy-1,1-diphosphonic acid and isolating the precipitate through filtration. The mixing units C and C' for example are preferably static mixers. The respective liquids are conveyed to the mixing units C and C' using for example and preferably metering pumps guaranteeing specific preset flow rates. The reactors D (D', D", ...) and E (E', E", ...) are equipped with heat exchanging means capable of managing the reaction temperature in a range between about 20 and about 200°C.

In yet another arrangement, the method can be represented by a semi-continuous setup whereby for example the chemical reactions are conducted continuously whereas the hydrolysis and following processing steps can be conducted batch-wise.

In general, when a C₃ to C₈ carboxylic acid acid is reacted with tetraphosphorus hexaoxide, the synthesis of the corresponding alkane-1-hydroxy-1,1-diphosphonic acid can be performed according to a batch process, a semi-continuous process or a continuous process. For C₉ to C₅₀ carboxylic acids the synthesis of the corresponding alkane-1-hydroxy-1,1-diphosphonic acid preferably is performed in a batch process.

### Examples

The following examples illustrate the invention; they are merely meant to exemplify the present invention but are not destined to limit or otherwise define the scope of the present invention.

### Example 1

A three-necked round-bottom flask, equipped with a mechanical stirrer, a reflux condenser and an injection tubing for P₄O₆ addition was charged under nitrogen atmosphere with 255 g (2.17 mole) of hexanoic acid and 7.03 g (0.391 mole) of water. The hexanoic acid solution was heated to 115°C and stabilised at this temperature. 95.5 g (0.434 mole) of P₄O₆ were then introduced through the injection tubing at 1.06 g/min, the extremity of the injection tubing being under the surface of the solution. Intensive stirring was applied during all the P₄O₆ addition period. The mixture was then allowed to further react at 130°C during 80 minutes in order to complete the reaction. Then 31 g of water were added to the reaction mixture and hydrolysis was performed at 140°C for 60 minutes. After cooling, 500 ml of dichloromethane were added and 100 ml were evaporated under vacuum. This induced crystallisation. The solid was filtered under nitrogen, washed with 200 ml of acetonitrile and dried under nitrogen atmosphere to yield 184g of hexane-1-hydroxy-1,1-diphosphonic acid which has a purity of 97% as determined by ¹H and ³¹P NMR analysis. This corresponds to a yield of 78.5% based on the phosphorus.

### Example 2

A three-necked round-bottom flask, equipped with a mechanical stirrer, a reflux condenser and an injection tubing for P₄O₆ addition was charged under nitrogen atmosphere with 391 g (1.953 mole) of lauric acid and 6.33 g (0.352 mole) of water. The mixture was heated to 100°C and stabilised at this temperature. 86 g (0.391 mole) of P₄O₆ were then introduced through the injection tubing at 0.717 g/min, the extremity of the injection tubing being under the surface of the solution. After 10 g of P₄O₆ were added, the temperature of the reacting medium was adjusted to 135°C for the rest of the addition. Intensive stirring was applied during all the P₄O₆ addition period. The mixture was then allowed to further react at 135°C during 120 minutes in order to complete the reaction. Then 28.1 g of water were added to the reaction mixture and hydrolysis was performed at 140°C for 80 minutes. After cooling to 80°C, 1500 ml of a mixture composed of 60% acetonitrile and 40% toluene were added and the solution was allowed to cool down to room temperature in a period of 240 minutes. The precipitate, thus formed, was filtered and recrystallised in 1400 ml of the mixture of toluene and acetonitrile to yield, after drying, 188 g of dodecyl-1-hydroxy-1, 1-diphosphonic acid which has a purity of 97% based on ¹H and ³¹P NMR analysis. This corresponds to a yield of 67.4% based on the phosphorus.

### Example 3

The mother liquor from example 2 was concentrated by vacuum distillation to remove acetonitrile and toluene and reused in a subsequent identical reaction. 118 g (0.589 mole) of lauric acid and 3.5 ml (0.194 mol) of water were added to the concentrated mother liquor. The mixture was heated to 100°C under nitrogen and stabilised at this temperature. 95.5 g (0.434 mole) of P₄O₆ were then introduced through the injection tubing at 0.796 g/min, the extremity of the injection tubing being under the surface of the solution. After the addition of 10 g of P₄O₆ the temperature of the reacting medium was adjusted to 135°C for the rest of the addition. Intensive stirring was applied during all the P₄O₆ addition period. The mixture was then allowed to further react at 135°C during 120 minutes in order to complete the reaction. Then 31.25 g of water were added to the reaction mixture and hydrolysis was performed at 140°C for 80 minutes. After cooling to 80°C, 1600 ml of a mixture composed of 60% acetonitrile and 40% toluene were added and the solution was allowed to cool down to room temperature in a period of 240 minutes. The precipitate, thus formed, was filtered. It was recrystallised in 1500 ml of the mixture of toluene and acetonitrile mentioned above to yield, after drying, 258 g of dodecyl-1-hydroxy-1,1-diphosphonic acid which has a purity of 98% based on ¹H and ³¹P NMR analysis. This corresponds to a yield of 84.2% based on the phosphorus.

### Example 4

A three-necked round-bottom flask, equipped with a mechanical stirrer, a reflux condenser and an injection tubing for P₄O₆ addition was charged under nitrogen atmosphere with 130 g (0.434 mole) of stearic acid and 1.09 g (0.061 mole) of water. The mixture was heated to 100°C and stabilised at this value. 19.1 g (0.087 mole) of P₄O₆ were then introduced through the injection tubing at 0.170 g/min, the extremity of the injection tubing being under the surface of the solution. After the addition of 1 g of P₄O₆ the temperature of the reacting medium was adjusted to 135°C for the rest of the addition. Intensive stirring was applied during all the P₄O₆ addition period. The mixture was then allowed to further react at 135°C during 120 minutes in order to complete the reaction. Then 5.94 g of water were added to the reaction mixture and hydrolysis was performed at 140°C for 80 minutes. The conversion into octadecyl-1-hydroxy-1,1-diphosphonic acid was 63% based on the phosphorous as determined by ³¹P NMR analysis.
After cooling to 80°C, 500 ml of a mixture composed of 60% acetonitrile and 40% toluene were added and the solution was allowed to cool down to room temperature in a period of 240 minutes. The precipitate, thus formed, was filtered. It was recrystallised in 400 ml of the above acetonitrile /toluene mixture to yield, after drying, 38.9 g of stearyl-1-hydroxy-1,1-diphosphonic acid which has a purity of 92% based on ¹H and ³¹P NMR analysis. This corresponds to a yield of 48% based on the phosphorus.

## Claims

1. A method for the synthesis of alkane-1-hydroxy-1,1-diphosphonic acid or its salts, under controlled thermal conditions, by substantially avoiding the formation of phosphines and low oxides of phosphorus and the accumulation of phosphite intermediates, comprising the steps of:
a) forming a reaction mixture by:
- gradually adding tetraphosphorus hexaoxide, under optimal mixing conditions, to the liquid phase and below the surface of the liquid phase comprising a carboxylic acid, while controlling and maintaining the temperature of the reaction mixture at a preset fixed value in the range of from 80°C to 200°C, said carboxylic acid having an atmospheric boiling point of 100°C or more above the temperature of the reaction mixture or
- gradually injecting tetraphosphorus hexaoxide, under optimal mixing conditions, below the surface of the liquid phase comprising a carboxylic acid, while controlling and maintaining the temperature of the reaction mixture at a preset fixed value in the range of from 80°C to 200°C, said carboxylic acid having an atmospheric boiling point of 40°C or less, preferably of 60°C or less, more preferably of 80°C or less, most particularly of less than 100°C above the temperature of the reaction mixture,
wherein said reaction mixture comprises a molar ratio of carboxylic acid to tetraphosphorus hexaoxide comprised between 3 and 15, preferably between 4 and 10, more preferably between 4 and 8, selected in such a way that the viscosity of the reaction mixture is 10 Pa.s or less, preferably 8 Pa.s or less, more preferably 6 Pa.s or less and most preferably 5 Pa.s or less, as measured by an in process vibrational viscometer calibrated with Certified Standard Oils, enabling said optimal mixing conditions, the gradual addition or injection leading to the formation of alkane-1-hydroxy-1,1-diphosphonic acid condensates;
b) hydrolyzing the alkane-1-hydroxy-1,1 -diphosphonic acid condensates of the reaction mixture of step a) by adding water, wherein the molar ratio of water to tetraphosphorus hexaoxide, added in step a) is 1 or more, and maintaining the reaction mixture at a temperature of at least 100°C to obtain a solution comprising the alkane-1-hydroxy-1,1-diphosphonic acid.

2. The method according to claim 1 wherein the temperature range of the reaction mixture of step a) is achieved through an initial tetraphosphorus hexaoxide addition step or a preheating of the liquid phase comprising carboxylic acid before starting the gradual addition of tetraphosphorus hexaoxide.

3. The method according to claim 1 or 2 comprising the further steps of:
- adding a suitable solvent to obtain a precipitate of alkane-1-hydroxy-1,1-diphosphonic acid,
- isolating the precipitate through filtration to obtain solid alkane-1-hydroxy-1,1-diphosphonic acid.

4. The method according to any of the preceding claims comprising the further step of neutralizing the alkane-1-hydroxy-1,1-diphosphonic acid through the addition of a base selected from the group consisting of hydroxides of alkali metals, hydroxides of alkaline earth metals, ammonia and amines, to form the corresponding salt.

5. The method according to any of the preceding claims, wherein the carboxylic acid of step a) comprises water.

6. The method according to any of the preceding claims, wherein the molar ratio of water of the aqueous solution of the carboxylic acid of step a) to the total amount of tetraphosphorus hexaoxide, added in step a) is between 0.1 and 2.0 and preferably between 0.5 and 1.5.

7. The method according to any of the preceding claims wherein in step a) the tetraphosphorus hexaoxide is gradually added to the carboxylic acid in a period of time comprised between 5 minutes and 5 hours.

8. The method according to any of the preceding claims wherein step a) is maintained at a temperature between 100°C and 160°C and preferably between 100°C and 130°C for a period of time between 5 minutes and 2 hours, after completion of the tetraphosphorus hexaoxide addition.

9. The method according to any of the preceding claims wherein the molar ratio of water added in step b) to the total amount of tetraphosphorus hexaoxide added in step a) is between 0.5 and 6 and preferably between 1 and 4 and more preferably 3.

10. The method according to any of the preceding claims wherein step b) is maintained at a temperature between 100°C and 170°C and preferably between 120°C and 160°C for a period of time between 5 minutes and 4 hours.

11. Method according to any of the preceding claims, wherein the precipitate, obtained through the addition of an organic solvent to the aqueous solution of step b), is isolated from the filtrate.

12. Method according to any of the preceding claims, wherein the solvent present in the filtrate is distilled off to form the mother liquor, comprising the carboxylic acid, for being reused in a subsequent step a).

13. Method according to any of the preceding claims, wherein excess of water present in the mother liquor is distilled off, the resulting mother liquor being reused in a subsequent step a) and the water, comprising carboxylic acid, being reused in a subsequent step b).

14. Method according to any of the preceding claims wherein the carboxylic acid is a linear or branched saturated or unsaturated aliphatic or saturated or unsaturated cycloaliphatic C₃ - C₂₅ mono- or polycarboxylic acid, optionally substituted with one or more substituents selected from the group consisting of aryl, aralkyl, alkoxy, halogen, and optionally comprising one or more heteroatoms selected from the group consisting of oxygen, sulfur or nitrogen.

15. Method according to any of the preceding claims wherein the carboxylic acid is a linear or branched saturated aliphatic C₃ - C₅₀ monocarboxylic acid, preferably a linear or branched saturated aliphatic or saturated cycloaliphatic C₅ - C₂₅ monocarboxylic acid.

## Patentansprüche

1. Verfahren zur Synthese von Alkan-1-hydroxy-1,1-diphosphonsäure oder Salzen davon unter kontrollierten Wärmebedingungen, indem die Bildung von Phosphinen und niederen Oxiden von Phosphor und die Ansammlung von Phosphitzwischenprodukten im Wesentlichen vermieden wird, das die Schritte umfasst:
a) Bilden einer Reaktionsmischung durch:
- schrittweises Hinzufügen von Tetraphosphorhexaoxid unter optimalen Mischbedingungen zur Flüssigphase und unter die Oberfläche der Flüssigphase, die eine Carbonsäure umfasst, während die Temperatur der Reaktionsmischung auf einem voreingestellten fixen Wert im Bereich von 80 °C bis 200°C kontrolliert und gehalten wird, wobei die Carbonsäure einen atmosphärischen Siedepunkt von 100 °C oder mehr über der Temperatur der Reaktionsmischung aufweist, oder
- schrittweises Injizieren von Tetraphosphorhexaoxid unter optimalen Mischbedingungen unter die Oberfläche der Flüssigphase, die eine Carbonsäure umfasst, während die Temperatur der Reaktionsmischung auf einem voreingestellten fixen Wert im Bereich von 80 °C bis 200°C kontrolliert und gehalten wird, wobei die Carbonsäure einen atmosphärischen Siedepunkt von 40 °C oder weniger, vorzugsweise 60 °C oder weniger, mehr bevorzugt 80 °C oder weniger, im spezifischsten weniger als 100°C über der Temperatur der Reaktionsmischung aufweist,
wobei die Reaktionsmischung ein Molverhältnis von Carbonsäure zu Tetraphosphorhexaoxid zwischen 3 und 15, vorzugsweise zwischen 4 und 10, mehr bevorzugt zwischen 4 und 8, aufweist, das so gewählt ist, dass die Viskosität der Reaktionsmischung laut Messung in einem vibrierenden Prozessviskosimeter, der mit Certified Standard Oils kalibriert wurde, 10 Pa.s oder weniger, vorzugsweise 8 Pa.s oder weniger, mehr bevorzugt 6 Pa.s oder weniger und am meisten bevorzugt 5 Pa.s oder weniger ist, wodurch die optimalen Mischbedingungen ermöglicht werden, wobei die schrittweise Zugabe oder Injektion zur Bildung von Alkan-1-hydroxy-1,1-diphosphonsäurekondensaten führt;
b) Hydrolysieren der Alkan-1-hydroxy-1,1-diphosphonsäurekondensate der Reaktionsmischung von Schritt a) durch Zugeben von Wasser, wobei das Molverhältnis von Wasser zu Tetraphosphorhexaoxid, das in Schritt a) hinzugefügt wird, 1 oder mehr ist, und Halten der Reaktionsmischung auf einer Temperatur von zumindest 100 °C, um eine Lösung zu erhalten, die die Alkan-1-hydroxy-1,1-diphosphonsäure umfasst.

2. Verfahren nach Anspruch 1, wobei der Temperaturbereich der Reaktionsmischung von Schritt a) durch einen anfänglichen Tetraphosphorhexaoxidzugabeschritt oder ein Vorerhitzen der Flüssigphase, die Carbonsäure umfasst, vor Beginn der schrittweisen Zugabe von Tetraphosphorhexaoxid erzielt wird.

3. Verfahren nach Anspruch 1 oder 2, das die weiteren Schritte umfasst:
- Hinzufügen eines geeigneten Lösungsmittels, um ein Präzipitat von Alkan-1-hydroxy-1,1-diphosphonsäure zu erhalten,
- Isolieren des Präzipitats mittels Filtration, um feste Alkan-1-hydroxy-1,1-diphosphonsäure zu erhalten.

4. Verfahren nach einem der vorstehenden Ansprüche, das den weiteren Schritt des Neutralisierens der Alkan-1-hydroxy-1,1-diphosphonsäure durch Zugabe einer Base, die aus der Gruppe ausgewählt ist, bestehend aus Hydroxiden von Alkalimetallen, Hydroxiden von Erdalkalimetallen, Ammoniak und Aminen, zur Bildung des entsprechenden Salzes umfasst.

5. Verfahren nach einem der vorstehenden Ansprüche, wobei die Carbonsäure von Schritt a) Wasser umfasst.

6. Verfahren nach einem der vorstehenden Ansprüche, wobei das Molverhältnis von Wasser der wässrigen Lösung der Carbonsäure von Schritt a) zur Gesamtmenge an Tetraphosphorhexaoxid, die in Schritt a) hinzugefügt wird, zwischen 0,1 und 2,0 und vorzugsweise zwischen 0,5 und 1,5 liegt.

7. Verfahren nach einem der vorstehenden Ansprüche, wobei das Tetraphosphorhexaoxid in Schritt a) in einem Zeitraum zwischen 5 Minuten und 5 Stunden schrittweise zur Carbonsäure hinzugefügt wird.

8. Verfahren nach einem der vorstehenden Ansprüche, wobei Schritt a) nach Abschluss der Tetraphosphorhexaoxidzugabe für einen Zeitraum zwischen 5 Minuten und 2 Stunden auf einer Temperatur zwischen 100 °C und 160 °C und vorzugsweise zwischen 100 °C und 130 °C gehalten wird.

9. Verfahren nach einem der vorstehenden Ansprüche, wobei das Molverhältnis von Wasser, das in Schritt b) hinzugefügt wird, zur Gesamtmenge an Tetraphosphorhexaoxid, das in Schritt a) hinzugefügt wird, zwischen 0,5 und 6 und vorzugsweise zwischen 1 und 4 liegt und vorzugsweise 3 beträgt.

10. Verfahren nach einem der vorstehenden Ansprüche, wobei Schritt b) für einen Zeitraum zwischen 5 Minuten und 4 Stunden auf einer Temperatur zwischen 100 °C und 170 °C und vorzugsweise zwischen 120 °C und 160 °C gehalten wird.

11. Verfahren nach einem der vorstehenden Ansprüche, wobei das Präzipitat, das durch Zugabe eines organischen Lösungsmittels zur wässrigen Lösung von Schritt b) erhalten wird, aus dem Filtrat isoliert wird.

12. Verfahren nach einem der vorstehenden Ansprüche, wobei das im Filtrat vorhandene Lösungsmittel abdestilliert wird, um die Mutterlauge zu bilden, die die Carbonsäure umfasst, um in einem darauffolgenden Schritt a) wiederverwendet zu werden.

13. Verfahren nach einem der vorstehenden Ansprüche, wobei ein in der Mutterlauge vorhandener Wasserüberschuss abdestilliert wird, wobei die entstehende Mutterlauge in einem darauffolgenden Schritt a) wiederverwendet wird und das Wasser, das Carbonsäure umfasst, in einem darauffolgenden Schritt b) wiederverwendet wird.

14. Verfahren nach einem der vorstehenden Ansprüche, wobei die Carbonsäure eine lineare oder verzweigte, gesättigte oder ungesättigte aliphatische oder gesättigte oder ungesättigte cycloaliphatische C₃-C₂₅-Mono- oder -Polycabonsäure ist, die optional mit einem oder mehreren Substituenten substituiert ist, die aus der Gruppe ausgewählt sind, bestehend aus Aryl, Aralkyl, Alkoxy, Halogen, und die optional ein oder mehrere Heteroatome umfasst, die aus der Gruppe ausgewählt sind, bestehend aus Sauerstoff, Schwefel oder Stickstoff.

15. Verfahren nach einem der vorstehenden Ansprüche, wobei die Carbonsäure eine lineare oder verzweigte gesättigte aliphatische C₃-C₅₀-Monocarbonsäure ist, vorzugsweise eine lineare oder verzweigte gesättigte aliphatische oder gesättigte cycloaliphatische C₅-C₂₅-Monocarbonsäure.

## Revendications

1. Procédé pour la synthèse d'acide alcane-1-hydroxy-1,1-diphosphonique ou de ses sels, dans des conditions thermiques contrôlées, évitant sensiblement la formation de phosphines et d'oxydes faibles de phosphore et l'accumulation d'intermédiaires de type phosphite, comprenant les étapes suivantes :
a) formation d'un mélange réactionnel par :
- addition progressive d'hexaoxyde de tétraphosphore, dans des conditions de mélange optimales, à la phase liquide et sous la surface de la phase liquide comprenant un acide carboxylique cependant que la température du mélange réactionnel est contrôlée et maintenue à une valeur fixe prédéterminée située dans la plage allant de 80°C à 200°C, ledit acide carboxylique ayant un point d'ébullition sous la pression atmosphérique supérieur de 100°C ou plus à la température du mélange réactionnel, ou
- injection progressive d'hexaoxyde de tétraphosphore, dans des conditions de mélange optimales, sous la surface de la phase liquide comprenant un acide carboxylique cependant que la température du mélange réactionnel est contrôlée et maintenue à une valeur fixe prédéterminée située dans la plage allant de 80°C à 200°C, ledit acide carboxylique ayant un point d'ébullition sous la pression atmosphérique supérieur de 40°C ou moins, de préférence de 60°C ou moins, mieux encore de 80°C ou moins, tout spécialement de moins de 100°C, à la température du mélange réactionnel,
lequel mélange réactionnel comprend un rapport molaire de l'acide carboxylique à l'hexaoxyde de tétraphosphore compris entre 3 et 15, de préférence entre 4 et 10, mieux encore entre 4 et 8, choisi de façon que la viscosité du mélange réactionnel soit de 10 Pa.s ou moins, de préférence de 8 Pa.s ou moins, mieux encore de 6 Pa.s ou moins et tout spécialement de 5 Pa.s ou moins, telle que mesurée par un viscosimètre à vibration intégré au procédé, étalonné avec des huiles étalons certifiées, permettant lesdites conditions de mélange optimales, l'addition ou injection progressive conduisant à la formation de condensats d'acide alcane-1-hydroxy-1,1-diphosphonique ;
b) hydrolyse des condensats d'acide alcane-1-hydroxy-1,1-diphosphonique du mélange réactionnel de l'étape a) par addition d'eau, le rapport molaire de l'eau à l'hexaoxyde de tétraphosphore ajouté dans l'étape a) étant de 1 ou plus, et maintien du mélange réactionnel à une température d'au moins 100°C pour que soit obtenue une solution comprenant l'acide alcane-1-hydroxy-1,1-diphosphonique.

2. Procédé selon la revendication 1, dans lequel la plage de température du mélange réactionnel de l'étape a) est atteinte par une étape initiale d'addition d'hexaoxyde de tétraphosphore ou un préchauffage de la phase liquide comprenant de l'acide carboxylique avant le démarrage de l'addition progressive d'hexaoxyde de tétraphosphore.

3. Procédé selon la revendication 1 ou 2, comprenant les étapes supplémentaires suivantes :
- addition d'un solvant convenable pour que soit obtenu un précipité d'acide alcane-1-hydroxy-1,1-diphosphonique,
- isolation du précipité par filtration pour que soit obtenu de l'acide alcane-1-hydroxy-1,1-diphosphonique solide.

4. Procédé selon l'une quelconque des revendications précédentes, comprenant l'étape supplémentaire de neutralisation de l'acide alcane-1-hydroxy-1,1-diphosphonique par l'addition d'une base choisie dans l'ensemble constitué par les hydroxydes de métaux alcalins, les hydroxydes de métaux alcalino-terreux, l'ammoniac et les amines, pour former le sel correspondant.

5. Procédé selon l'une quelconque des revendications précédentes, dans lequel l'acide carboxylique de l'étape a) comprend de l'eau.

6. Procédé selon l'une quelconque des revendications précédentes, dans lequel le rapport molaire de l'eau de la solution aqueuse de l'acide carboxylique de l'étape a) à la quantité totale d'hexaoxyde de tétraphosphore ajouté dans l'étape a) est compris entre 0,1 et 2,0 et de préférence entre 0,5 et 1,5.

7. Procédé selon l'une quelconque des revendications précédentes, dans lequel, dans l'étape a), l'hexaoxyde de tétraphosphore est ajouté progressivement à l'acide carboxylique sur une période de temps comprise entre 5 minutes et 5 heures.

8. Procédé selon l'une quelconque des revendications précédentes, dans lequel l'étape a) est maintenue à une température comprise entre 100°C et 160°C et de préférence entre 100°C et 130°C pendant une période de temps comprise entre 5 minutes et 2 heures, après l'achèvement de l'addition d'hexaoxyde de tétraphosphore.

9. Procédé selon l'une quelconque des revendications précédentes, dans lequel le rapport molaire de l'eau ajoutée dans l'étape b) à la quantité totale d'hexaoxyde de tétraphosphore ajouté dans l'étape a) est compris entre 0,5 et 6 et de préférence entre 1 et 4 et mieux encore est de 3.

10. Procédé selon l'une quelconque des revendications précédentes, dans lequel l'étape b) est maintenue à une température comprise entre 100°C et 170°C et de préférence entre 120°C et 160°C pendant une période de temps comprise entre 5 minutes et 4 heures.

11. Procédé selon l'une quelconque des revendications précédentes, dans lequel le précipité, obtenu par l'addition d'un solvant organique à la solution aqueuse de l'étape b), est isolé à partir du filtrat.

12. Procédé selon l'une quelconque des revendications précédentes, dans lequel le solvant présent dans le filtrat est chassé par distillation pour que soit formée la liqueur mère, comprenant l'acide carboxylique, destinée à être réutilisée dans une étape a) subséquente.

13. Procédé selon l'une quelconque des revendications précédentes, dans lequel l'eau en excès présente dans la liqueur mère est chassée par distillation, la liqueur mère résultante étant réutilisée dans une étape b) subséquente.

14. Procédé selon l'une quelconque des revendications précédentes, dans lequel l'acide carboxylique est un acide mono- ou poly-carboxylique en C₃ à C₂₅ cycloaliphatique saturé ou insaturé ou aliphatique saturé ou insaturé, linéaire ou ramifié, éventuellement substitué par un ou plusieurs substituants choisis dans l'ensemble constitué par les halogènes, aryle, aralkyle, alcoxy, et comprenant éventuellement un ou plusieurs hétéroatomes choisis dans l'ensemble constitué par l'oxygène, le soufre et l'azote.

15. Procédé selon l'une quelconque des revendications précédentes, dans lequel l'acide carboxylique est un acide monocarboxylique en C₃ à C₅₀ aliphatique saturé, linéaire ou ramifié, de préférence un acide monocarboxylique en C₅ à C₂₅ cycloaliphatique saturé ou aliphatique saturé, linéaire ou ramifié.
